Europäisches Patentamt

European Patent Office

Office européen des brevets

(19)

(11) **EP 0 683 306 B1**

(12) **EUROPÄISCHE PATENTSCHRIFT**

(45) Veröffentlichungstag und Bekanntmachung des Hinweises auf die Patenterteilung:
**05.11.1997 Patentblatt 1997/45**

(51) Int Cl.$^6$: **F02B 23/06**

(21) Anmeldenummer: **95102714.3**

(22) Anmeldetag: **25.02.1995**

(54) **Brennraumform für eine luftverdichtende und selbstzündende Brennkraftmaschine mit Abgasturbolader**

Combustion chamber shape for an air compressing, self igniting combustion engine with turbocompressor

Forme de la chambre de combustion pour un moteur à compression d'air et à allumage par compression avec turbocompresseur

(84) Benannte Vertragsstaaten:
**AT DE FR IT NL SE**

(30) Priorität: **19.04.1994 DE 4413556**

(43) Veröffentlichungstag der Anmeldung:
**22.11.1995 Patentblatt 1995/47**

(73) Patentinhaber: **MAN NUTZFAHRZEUGE AG**
**80995 München (DE)**

(72) Erfinder:
- **D'Alfonso, Nunzio, Dr.**
  **D-90441 Nürnberg (DE)**
- **Ensner, Jürgen**
  **D-90441 Nürnberg (DE)**
- **Schwarz, Axel, Dipl.-Ing.**
  **D-90455 Nürnberg (DE)**

(56) Entgegenhaltungen:
**WO-A-92/13190**    **AT-B- 389 566**
**DE-C- 891 767**

**Beschreibung**

Die Erfindung bezieht sich auf eine Brennraumform gemäß dem Gattungsbegriff des Patentanspruches 1.

Es ist allgemein bekannt, einen Brennraum im Kolben einer Brennkraftmaschine rotationssymmetrisch auszubilden. Der Brennraumboden ist dabei senkrecht zur Zylinderachse. Die Einspritzdüse ist bei Motoren mit vier Ventilen zentrisch zum Brennraum und zur Zylinderachse angeordnet und die Einspritzstrahlen damit gleich lang. Bei Brennkraftmaschinen mit nur zwei Ventilen ist der Ventilsteg so klein, daß eine zentrische Anordnung der Einspritzdüse nicht möglich ist. Eine gleichgerichtete exzentrische Anordnung einer Brennraummulde bei gleicher exzentrischer Anordnung der Einspritzdüse ist bei modernen schnellaufenden Brennkraftmaschinen mit einem Brennraum großen Durchmessers und entsprechend kleiner Tiefe kaum mehr möglich,da sonst der Abstand der Brennraumwände vom Kolbenrand und vom Ringträger des Kompressionskolbenringes zu klein wird. Eine darausfolgende Exzentrizität der Einspritzdüse gegenüber der Brennraummulde führt bei einem Brennraumboden senkrecht zur Zylinderachse dazu, daß die sich kegelig auffächernden Brennstoffstrahlen mit größerer Strahllänge eher den Boden des Brennraumes und des Zylinderkopfbodens berühren als die Kürzeren, was durch Abkühlung am Boden zu einer Verschlechterung des Ausbrandes führt.

Ausgehend von einer Brennraumform gemäß dem Gattungsbegriff liegt der Erfindung die Aufgabe zugrunde, bei Brennraumdurchmessern von insbesondere mehr als 70 mm und einem Verhältnis des Brennraumdurchmessers zum Kolbendurchmesser von mehr als 0,70 die Form des Brennraumes so zu gestalten, daß der notwendige minimale Abstand der Einspritzstrahlen von einem Zylinderkopfboden nicht dazu führt, daß die Einspritzstrahlenkegel den Boden des Brennraumes berühren.

Erfindungsgemaß wird diese Aufgabe durch die kennzeichnenden Merkmale des Patentanspruches 1 gelöst.

Unter Berücksichtigung des Öffnungswinkels e des Einspritzstrahlenkegels und durch die Bestimmung des Winkels $\beta$, vermeidet die daraus resultierende Neigung des Brennraumbodens um den Winkel $\eta$, daß Brennstoffpartikel vorzeitig den Brennraumboden berühren und durch Abkühlung einem vollständigen Ausbrand entzogen werden.

Vorteilhafte Ausbildungen eines Brennraumes können den Ansprüchen 2 und 3 entnommen werden.

Ausführungsbeispiele von erfindungsgemäßen Brennraumformen sind in Zeichnungen dargestellt. Es zeigt:

Fig. 1     einen Querschnitt I - I durch einen Kolben mit Brennraum im Kolbenboden

Fig. 2     eine Draufsicht auf den Kolbenboden mit Brennraum

Fig. 3     eine Draufsicht auf den Brennraum mit Winkelangaben zu den Einspritzstrahlen

Fig. 4     einen Querschnitt durch einen Brennraum mit kegeligem Brennraumboden

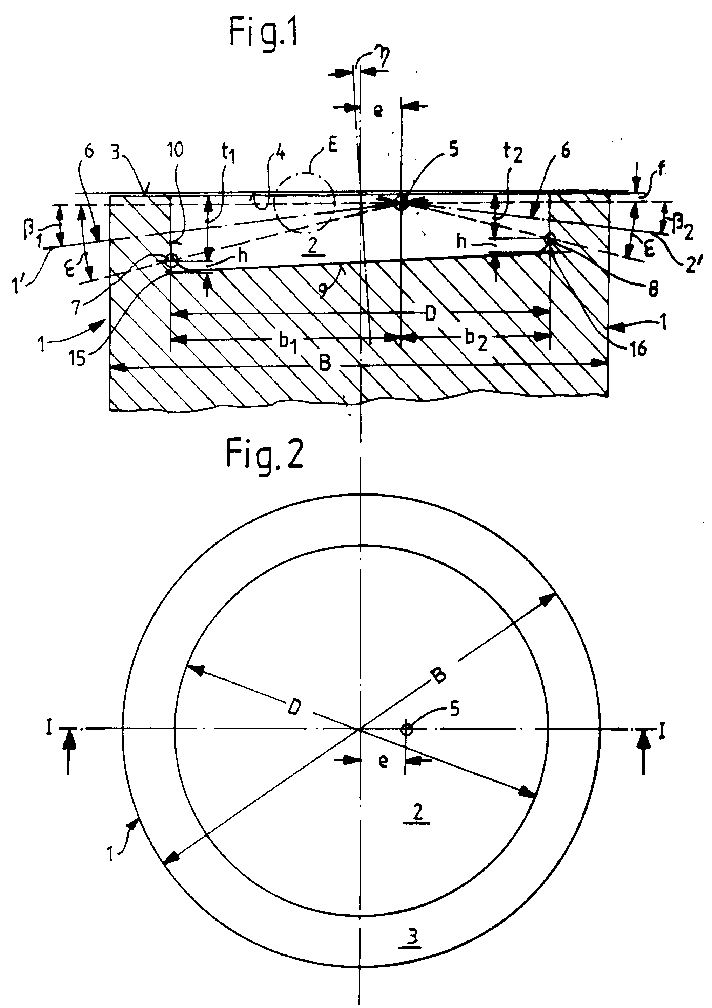

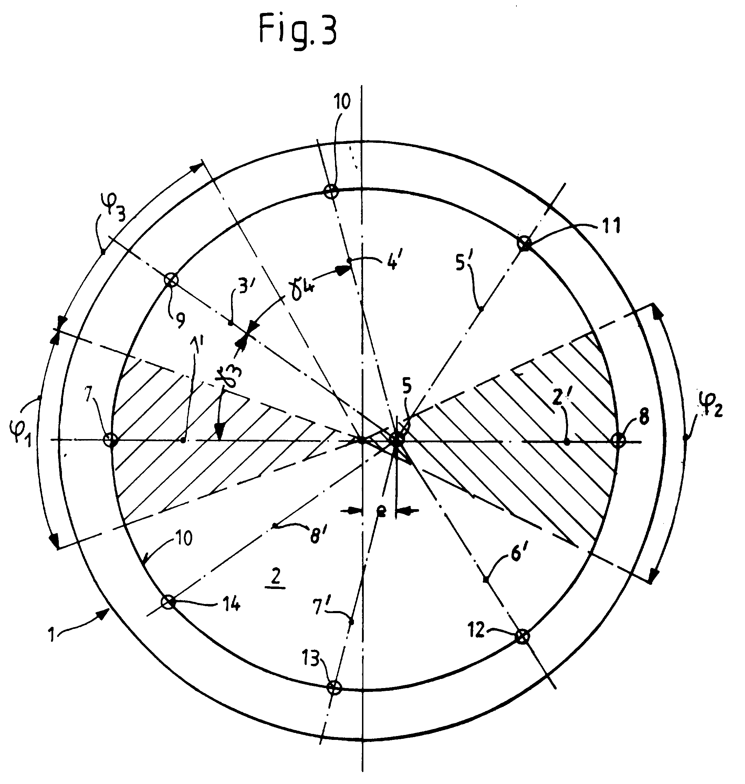

Einen Querschnitt I-I durch einen Kolben 1 mit Brennraum 2 im Kolbenboden 3 zeigt Fig. 1. Dem Kolbenboden 3 steht ein Zylinderkopfboden 4 gegenüber. Eine hier nicht näher dargestellte Mehrstrahleinspritzdüse besitzt einen Abspritzpunkt 5. Der Abspritzpunkt 5 hat eine Eintauchtiefe f bezogen auf den Kolbenboden 3, wenn der Kolben 1 in OT-Stellung steht. Vom Abspritzpunkt 5 gehen die Einspritzstrahlen "i" = 1' bis 8' (Fig. 3 ) aus, wobei in Fig. 1 die diametralen Einspritzstrahlen i = 1' und i = 2' dargestellt sind. Der Abspritzpunkt 5 ist um die Exzentrizität e gegenüber der Brennraumachse versetzt. Im dargestellten Beispiel fällt die Brennraumachse mit der Zylinderachse zusammen. Die Mittellinien 6 der Einspritzstrahlen i= 1' und i = 2' schließen mit dem Kolbenboden 3 die Winkel $\beta_1$, $\beta_2$ ein, wobei die Winkel $\beta_1$ und $\beta_2$ den gleichen Wert $\beta = {}^\varepsilon/_2$ für alle Einspritzstrahlen 1' bis 8' erhalten, wobei $\varepsilon$ der Öffnungswinkel der Einspritzstrahlenkegel ist. Jeder der Einspritzstrahlen "i" ( hier die Einspritzstrahlen 1' und 2') hat aus strömungstechnischen Gründen den gleichen Öffnungswinkel $\varepsilon$.

Die erfindungsgemäßen Abmessungen des Brennraumes 2 sind in Fig. 1 an den Einspritzstrahl i = 1' und i = 2' erläutert. Der unterste Auftreffpunkt des Einspritzstrahles i = 1' ist mit 7 und der unterste Auftreffpunkt des Einspritzstrahlenkegels i = 2' ist mit 8 bezeichnet. Ausgehend vom Kolbenboden 3 liegen die untersten Auftreffpunkte 7, 8 der Einspritzstrahlen i = 1' und i = 2' in einer Tiefe $t_1 = b_1 \cdot tg\ (\beta + 0,5\varepsilon) + f$ und $t_2 = b_2\ tg\ (\beta + 0,5\ \varepsilon) + f$.

Hierin bedeuten $\varepsilon$ den Öffnungswinkel der kegelförmig ausgebildeten Brennstoffstrahlen, $\beta$ den Winkel zwischen Kolbenboden 3 und den Mittellinien 6 der Brennstoffstrahlenkegel und f die Eintauchtiefe im Brennraum 2 des Abspritzpunktes 5 bezüglich der OT-Stellung des Kolbens. Die Abstände $b_1$ und $b_2$ sind die Projektionen auf die Kolbenbodenebene der Abstände der Auftreffpunkte 7 bzw. 8 vom Abspritzpunkt 5.

Für einen beliebigen Einspritzstrahl "i" beträgt der Wert der Tiefe $t_i = b_i\ tg\ (\ \beta + 0,5\ \varepsilon\ ) + f$. Wählt man $\beta = {}^\varepsilon/_2$ ergibt sich $t_i = b_i \cdot tg\ \varepsilon + f$.

Damit die Auftreffpunkte 7 und 8 sowie die der anderen Einspritzstrahlen auf jeden Fall und gleichmäßig oberhalb eines Brennraumbodens 9 des Brennraumes 2 liegen ist der Brennraumboden 9 derart zur Zylinderachse geneigt, daß das Lot auf den Brennraumboden 9 mit der Zylinderachse einen Winkel $\eta$ einschließt. Der Winkel $\eta$ ergibt sich zu,

$$\eta = \text{arc tg}\ \frac{t1 - t2}{D}$$

wobei D den Durchmesser des Brennraumes 2 bedeutet. Die untersten Auftreffpunkte 7 und 8 liegen damit in einer Höhe h über dem Brennraumboden 9.

Der Abstand h wird ausgehend von den Überschneidungspunkten der Verlängerungen von Brennraumwand 10 und Brennraumboden 9 in den Ebenen parallel zur Zylinderachse auf denen die Mittelachsen der jeweiligen Einspritzstrahlen liegen, z. B. 15 und 16 für die Einspritzstrahlen i= 1' und i = 2' mit dem Kolben 1 in OT bestimmt.

Die Brennraumwand 10 ist zylindrisch und parallel zur Zylinderachse verlaufend ausgebildet. Es versteht sich, daß die Brennraumwand 10 auch leicht gekrümmt, bzw. etwas schräg verlaufen kann, wichtig ist, daß die Abstände der Brennstoffstrahlenkegel vom Brennraumboden 9 gleichmäßig sind.

Fig. 2 zeigt eine Draufsicht auf den Kolbenboden 3. Der Brennraum 2 hat einen Durchmesser D, während der Durchmesser des Kolbens 1 B beträgt. Im dargestellten Beispiel ist der Brennraum 2 konzentrisch zur Zylinderachse.

Der Abspritzpunkt 5 weist eine Exzentrizität e zur Brennraumachse auf, die, bedingt durch den großen Brennraumdurchmesser D, nicht, bzw. nicht im gleichen Maß wie die Einspritzdüse exzentrisch angeordnet werden kann, woraus sich die unter Fig. 1 beschriebene Brennraumform ergibt.

Eine Draufsicht auf den Kolben 1 mit Brennraum 2 zeigt die Fig. 3. Die Mittelachsen der beispielhaft gezeichneten acht Brennstoffstrahlen 1' bis 8' sind strichpunktiert. Die Auftreffpunkte dieser Brennstoffstrahlenachsen auf die Brennraumwand 10 ( Fig. 1 ) sind mit den Bezugszeichen 7 bis 14 versehen. Die Einspritzstrahlen gehen vom Abspritzpunkt 5 aus, welcher um die Exzentrizität e gegenüber der Brennraumachse verschoben ist. Die Anordnung der Strahlen erfolgt dann unter den bekannten Bedingungen, daß die den einzelnen Strahlen zugeordneten Volumina entsprechend den jeweiligen Kraftstoffanteilen bemessen sind. Die Errechnung der Volumina erfolgt unter Berücksichtigung der örtlichen Tiefe des Brennraumes.

Am Beispiel der Brennstoffstrahlen i = 1' und i = 2' werden die von diesen Strahlen erfaßten Volumina in der Projektion schraffiert dargestellt.

Die von der Brennraumachse ausgehenden Winkel dieser Volumina sind mit φ bezeichnet. Als Beispiel sind die Winkel $\varphi_1$, $\varphi_2$ und $\varphi_3$ eingetragen.

Für einen zu einem Einspritzstrahl "i" gehörigen Winkel φi gilt:

$$\varphi i = \frac{2\pi}{z} \cdot \frac{t1 + t2}{2 \cdot ti}$$

$$\Sigma\ \varphi i = 2\ \pi$$

Z      Anzahl der Spritzlöcher ( hier 8 )

ti      Tiefe des untersten Auftreffpunktes eines der Einspritzstrahlenkegel "i", gerechnet vom Kolbenboden 3 (Fig. 1 )

Die Winkellagen der einzelnen Einspritzstrahlen werden definiert aufgrund der Auftreffpunkte 7 bis 14 und werden so festgelegt, wie es in Fig. 3 an Hand der Winkel γ3 und γ4 gezeigt ist wobei die Winkel φi sich auf den Kreis mit Mitte im Brennraumzentrum und die Winkel $\gamma_i$ auf den Strahlstern mit Mitte im Abspritzpunkt 5 beziehen und die Strahlachsen $\gamma_i$ die Brennraumwand 10 in der Mitte der von den Winkeln φi definierten Bögen treffen.

Diese Beziehungen gelten unter der Voraussetzung einer gleichmäßigen Verteilung des Kraftstoffes unter allen Spritzlöchern der Einspritzdüse, was bei einer senkrechten Düsenachsenlage zum Zylinderkopfboden und zum Kolbenboden verifiziert ist.

Bei geneigten Düsenachsenlagen ist die Verteilung des Kraftstoffes unter den Kraftstoffstrahlen, bedingt durch die unterschiedlichen Ausströmwinkel an den Spritzlöchern, bekanntlich ungleichmäßig, so daß eine zusätzliche, in üblicher Weise experimentelle Anpassung der Düsenstrahlenwikel $\gamma_i$ vorteilhaft ist.

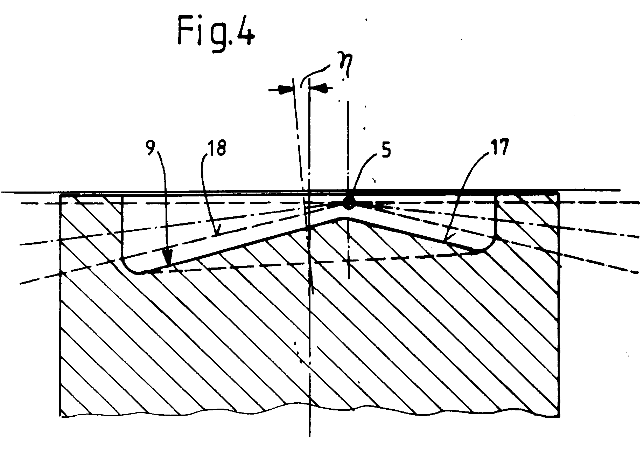

Fig. 4 zeigt eine alternative Ausbildung des Brennraumbodens 9. Dieser ist kegelig ausgeführt, wobei die Spitze des Kegels unterhalb des Abspritzpunktes 5 zu liegen kommt. Die Mantelfläche 17 des Kegels verläuft parallel zu den untersten Mantellinien 18 der jeweiligen Einspritzstrahlenkegel. Der Brennraumboden 9 ist wie bei der Brennraumform nach Fig. 1 derart zur Zylinderachse geneigt, daß das Lot auf den Brennraumboden 9 mit der Zylinderachse einen Winkel η einschließt.

**Patentansprüche**

1.    Brennraumform einer luftverdichtenden, direkt einspritzenden und selbstzündenden Brennkraftmaschine mit Abgasturbolader, wobei der Brennraum muldenförmig gestaltet und im Kolbenboden angeordnet ist und wobei die Einspritzdüse als Mehrlochdüse ausgebildet ist und ein Abspritzpunkt der Einspritzdüse um einen Betrag e gegenüber der Brennraumachse exzentrisch angeordnet ist und der Durchmesser D der Kolbenmulde größer als 0,70 · B ist, mit B als Kolbendurchmesser dadurch gekennzeichnet, daß der Brennraumboden (9) derart zur Zylinderachse geneigt ist, daß das Lot auf den Brennraumboden (9) mit der Zylinderachse einen Winkel η einschließt und der Winkel η sich nach der Beziehung

$$\eta = \text{arc tg}\ \frac{t1 - t2}{D}$$

errechnet und daß die Kontur des Brennraumes (2) im Querschnitt gesehen folgenden Beziehungen genügen muß

$$t1 = b_1 . tg (\beta_1 + 0,5\ \varepsilon) + f$$

$$t_2 = b_2 . tg (\beta_2 + 0,5\ \varepsilon) + f$$

$$\beta_1 = \beta_2 = \beta$$

$$t_i = b_i . tg (\beta + 0,5\ \varepsilon) + f$$

es bedeutet:

$t_1, t_2$      Abstände der untersten Auftreffpunkte diametral verlaufender Einspritzstrahlkegel, vom Kolbenboden aus gerechnet mit dem Kolben in der oberen Totpunktlage.

$b_1, b_2$      Projektion der Abstände der Auftreffpunkte diametral verlaufender Einspritzstrahlen auf die Kolbenbodenebene, wobei die Abstände von der Projektion des Abspritzpunktes auf die gleiche Ebene gerechnet werden.

$\beta_1 = \beta_2 = \beta$      Winkel zwischen einer Ebene parallel zum Kolbenboden, wobei die Ebene durch den Abspritzpunkt der Einspritzdüse verläuft und einer Achse (6) eines Einspritzstrahls, wobei β gleich ist für alle Einspritzstrahlen

$\varepsilon$      Öffnungswinkel der Einspritzstrahlenkegel

$t_i, b_i$      entsprechende Abstände für einen beliebigen Einspritzstrahl "i"

$f =$      Eintauchtiefe des Abspritzpunktes (5), bezogen auf den Kolbenboden in OT-Stellung des Kolbens

2. Brennraumform nach Anspruch 1, dadurch gekennzeichnet, daß der Brennraum (2) zylinderförmig ausgebildet ist, daß der Brennraumboden (9) eben ist, daß der Brennraumboden (9) derart zur Zylinderachse geneigt ist, daß das Lot auf den Brennraumboden (9) mit der Zylinderachse einen Winkel η einschließt, und daß die Umfangswände (10) des Brennraumes (2) parallel zur Zylinderachse verlaufen.

3. Brennraumform nach Anspruch 1, dadurch gekennzeichnet, daß der Brennraumboden (9) kegelförmig ausgebildet ist, daß der Brennraumboden (9) derart zur Zylinderachse geneigt ist, daß das Lot auf den Brennraumboden (9) mit der Zylinderachse einen Winkel η einschließt, daß sich eine Spitze des Kegels unter dem Abspritzpunkt (5) der Einspritzdüse befindet, und daß die Mantelfläche (17) des Kegels annähernd parallel zu den untersten Mantellinien (18) der Einspritzstrahlenkegel verläuft.

## Claims

1. Shape of a combustion chamber in an air-compressing, direct-injection and spontaneous-ignition internal-combustion turbocharged engine, the combustion chamber having a bowl-type form and being located in the piston crown and the injection nozzle being a multi-hole nozzle and an injection-nozzle opening point being eccentrically located by an amount e relative to the combustion chamber axis and the diameter D of the piston bowl being larger than 0.70 B, where B is the piston diameter, said combustion chamber shape being characterised in that the combustion chamber bottom (9) is inclined towards the cylinder axis so that the perpendicular dropped on to the combustion-chamber bottom (9) forms together with the cylinder axis an angle η calculated on the basis of the formula

$$\eta = \text{arc tg } \frac{t1 - t2}{D}$$

and that the contour of the cross-section of the combustion chamber (2) must satisfy the following requirements

$$t_1 = b_1 \cdot tg (\beta_1 + 0.5\ \varepsilon) + £$$

$$t_2 = b_2 \cdot tg (\beta_2 + 0.5\ \varepsilon) + £$$

$$\beta_1 = \beta_2 = \beta$$

$$t_i = b_i \cdot tg (\beta + 0.5\ \varepsilon) + £$$

where:

     **$t_1, t_2$:** Distances of the lowest impact points of diametrical injection jet cones, said distances being calculated from piston crown with piston in TDC position.

**b₁, b₂:** Projection of the distances of the impact points of diametrical injection jets on to the piston crown plane, the distances being calculated from the projection of the opening.point on to the same plane.

$\beta_1 = \beta_2 = \beta$**:** Angle between a plane running parallel to the piston crown, the plane running through the opening point of the injection nozzle, and an axis (6) of an injection jet, β being identical for all injection jets.

**ε:** Opening angle of the injection jet cones

**tᵢ, bᵢ:** Corresponding distances for a random injection jet "i"

$\mathcal{E}$ = Immersion depth of the opening point (5) relative to the piston crown with the piston in TDC position.

2. Shape of combustion chamber according to Claim 1, characterised in that the combustion chamber (2) is cylindrical in shape, that the combustion-chamber bottom (9) is flat, that the combustion-chamber bottom (9) is inclined towards the cylinder axis so that the perpendicular dropped on to the combustion-chamber bottom (9) forms together with the cylinder axis an angle η and that the peripheral walls (10) of the combustion chamber (2) run parallel to the cylinder axis.

3. Shape of combustion chamber according to Claim 1, characterised in that the combustion-chamber bottom (9) is cone-shaped, that the combustion-chamber bottom (9) is inclined towards the cylinder axis so that the perpendicular dropped on to the combustion-chamber bottom (9) forms together with the cylinder axis an angle η, that the cone point is located under the opening point (5) of the injection nozzle and that the surface (17) of the cone runs almost parallel to the lowest surface lines (18) of the injection jet cones.

**Revendications**

1. Forme de chambre de combustion d'un moteur à combustion interne à turbocompresseur, à compression d'air, à injection directe et à allumage non commandé, la chambre de combustion ayant une forme de cavité et est réalisée dans le fond du piston, l'injecteur ayant une buse à plusieurs orifices et le point d'éjection de l'injecteur est excentré de la distance (e) par rapport à l'axe de la chambre de combustion et le diamètre (D) de la cavité du piston est supérieur à 0,70 . B ; B étant le diamètre du piston,

    caractérisée en ce que

    le fond (9) de la chambre de combustion est inclinée par rapport à l'axe du cylindre pour que la perpendiculaire au fond (9) de la chambre de combustion fasse avec l'axe du cylindre un angle η et que cet angle se calcule suivant la formule suivante :

$$\eta = \text{arc tg} \frac{t1 - t2}{D}$$

le contour de la chambre de combustion (2) vu en section répond aux équations suivantes :

$$t1 = b_1 \cdot \text{tg} \, (\beta_1 + 0.5 \, \varepsilon) + f$$

$$t_2 = b_2 \cdot \text{tg} \, (\beta_2 + 0.5 \, \varepsilon) + f$$

$$\beta_1 = \beta_2 = \beta$$

$$t_i = b_i \cdot \text{tg} \, (\beta + 0.5 \, \varepsilon) + f$$

dans lesquelles :

    $T_1$, $T_2$ : distance du point d'intersection inférieure, du cône d'injection diamétral et du fond du piston, le piston étant en position de point mort haut,

    $b_1$, $b_2$ : projection des distances des points d'intersection des jets d'injection diamétraux et du plan du fond du piston, les distances étant calculées à partir de la projection du point d'éjection dans le même plan,

    $\beta_1 = \beta_2 = \beta$ : angle entre un plan parallèle au fond du piston et passant par le point d'éjection de l'injecteur et un axe 6 d'un jet d'injection, β étant le même pour tous les jets d'injection,

    ε : angle d'ouverture du cône du jet d'injection

    $t_i$, $b_i$ : distance correspondante pour un jet d'injection quelconque "i",

    f : profondeur de pénétration du point d'éjection (5), rapporté au fond du piston en position de point mort haut.

2. Forme de chambre de combustion selon la revendication 1,
    caractérisée en ce que
    la chambre de combustion (2) est cylindrique et son fond (9) est plan, ce fond (9) étant incliné par rapport à l'axe du cylindre pour que la perpendiculaire au fond (9) fasse un angle (η) avec l'axe du cylindre et la paroi périphérique (10) de la chambre de combustion (2) est parallèle à l'axe du cylindre.

3. Forme de chambre de combustion selon la revendication 1,
    caractérisée en ce que

    • le fond (9) de la chambre de combustion est conique,

- le fond (9) est incliné par rapport à l'axe du cylindre pour que la perpendiculaire au fond (9) fasse un angle (η) avec l'axe du cylindre et que le sommet du cône se trouve en dessous du point d'éjection (5) de l'injecteur, et
- la surface enveloppe (17) du cône est pratiquement parallèle aux génératrices inférieures (18) du cône du jet d'injection.

## Fig.1

## Fig.2

# Fig.3

# Fig.4